# FASCICULE DE BREVET EUROPEEN

(11) **EP 2 396 690 B1**
(45) Date de publication et mention de la délivrance du brevet: **08.10.2014**
(21) Numéro de dépôt: 10707576.4
(22) Date de dépôt: 25.01.2010
(51) Int. Cl.: G02B 21/36

(54) **PROCÉDÉ DE PRÉPARATION D'UNE PLAQUE D'ANALYSE VIRTUELLE TRAITÉE**
VERFAHREN ZUR HERSTELLUNG EINER BEARBEITETEN VIRTUELLEN ANALYSEPLATTE
METHOD FOR PREPARING A PROCESSED VIRTUAL ANALYSIS PLATE

(30) Priorité: 13.02.2009 FR 0950950
(43) Date de publication de la demande: 21.12.2011
(73) Titulaire: NOVACYT, 78140 Velizy Villacoublay (FR)
(72) Inventeur: PELTIER, Eric, F-92140 Clamart (FR)
(74) Mandataire: Jacobson, Claude
(86) Numéro de dépôt international: PCT/FR2010/050102
(87) Numéro de publication internationale: WO 2010/092271

(56) Documents cités:
- US-A- 6 026 174
- US-A1- 2002 114 497
- US-A1- 2004 004 614
- US-A1- 2008 032 328

## Description

La présente invention concerne un procédé de préparation d'une plaque d'analyse virtuelle d'un prélèvement cytologique disposé sur une plaque d'analyse en vue de permettre l'analyse cellulaire dudit prélèvement, du type comprenant les étapes suivantes :
- réaliser un traitement du prélèvement, ledit traitement étant réalisé pour permettre de différencier les cellules pathologiques des cellules saines du prélèvement,
- effectuer une acquisition d'images du prélèvement disposé sur la plaque d'analyse de sorte à obtenir une pluralité d'images représentant chacune une zone de la plaque d'analyse, lesdites images mises côte à côte formant une image de l'intégralité du prélèvement de sorte à créer une plaque d'analyse virtuelle. Un tel procédé est par exemple divulgué dans le document US-A-2008/0032328.

L'invention s'applique particulièrement à des procédés d'analyse cytologique.

L'analyse de prélèvements est par exemple utilisée pour le diagnostic de pathologies, à partir de cellules prélevées par frottis (cervicaux, vaginaux ou autres), par ponction d'organes (sein, thyroïde, ganglion ou autres) ou encore par recueil (urine, lavage broncho-alvéolaire ou autres), pour détecter tout type de pathologie et plus particulièrement des états précancéreux ou cancéreux.

De façon connue, les prélèvements sont examinés par des observateurs spécialisés et entraînés pour détecter les cellules susceptibles d'être pathologiques dans un prélèvement disposé sur une plaque ou lame d'analyse. Afin de permettre la détection de cellules potentiellement pathologiques, le prélèvement subit un traitement, tel qu'une coloration permettant de mettre en évidence entre autres, les caractéristiques du noyau et du cytoplasme des cellules afin d'aider au repérage et au diagnostic des cellules pathologiques. Lorsque le prélèvement est observé, les cellules potentiellement pathologiques montrent alors des différences d'affinités tinctoriales, de taille et de forme, tant au niveau du noyau que du cytoplasme, par rapport aux cellules normales.

L'analyse peut se faire de façon manuelle, sans assistance particulière. Dans ce cas, le médecin ou le technicien spécialisé fait défiler des plaques de prélèvement sous un microscope et observe chacune d'entre elles en vue de détecter les anomalies morphologiques indiquant des cellules pathologiques pouvant correspondre à un état précancéreux ou cancéreux par exemple. Une telle méthode d'analyse est fastidieuse et consomme énormément de temps. En outre, elle n'offre pas de résultats satisfaisants avec surtout un nombre de « faux négatifs » estimés à environ 30%, c'est-à-dire de prélèvements considérés comme normaux alors qu'il existe une pathologie chez le patient, notamment précancéreuse ou cancéreuse avec les risques d'évolution ultérieure du cancer chez un patient rassuré à tort.

Pour améliorer les résultats des analyses, il a été proposé d'améliorer l'échantillonnage, c'est-à-dire le nombre de cellules, leur fixation, leur coloration et leur étalement sur la plaque d'analyse, mais aussi d'aider dans son analyse le médecin ou le technicien spécialisé par exemple grâce à des moyens informatiques d'analyse, tels que des logiciels de traitement d'images et autre.

A cet effet, une caméra ou un appareil de prise de vues est utilisé pour acquérir des images des différentes zones du prélèvement disposé sur la plaque d'analyse et communiquer les données de ces images à un système informatique qui travaille alors sur une plaque d'analyse « virtuelle ».

Ce système informatique permet un traitement du signal, un pré-traitement des images et une analyse comparative des images avec éventuellement des bases de données nouvellement créées ou existantes afin d'accélérer le processus d'analyse et ainsi permettre l'analyse d'un plus grand nombre de prélèvements et afin d'assister le médecin ou le technicien spécialisé. Les images d'un prélèvement sont par exemple examinées automatiquement et si certaines zones présentant une anomalie sont relevées, les images correspondantes sont communiquées à un médecin ou au technicien spécialisé qui peut alors déterminer si oui ou non ces zones montrent des cellules pathologiques. Le médecin ou le technicien spécialisé n'observe donc plus que des zones anormales sans analyser les zones considérées comme normales par le système informatique. Un tel procédé permet effectivement d'accélérer l'analyse et de fiabiliser le diagnostic.

Cependant le médecin ou le technicien spécialisé n'a alors plus l'occasion d'observer des prélèvements normaux ou présentant des modifications morphologiques mineures, ce qui est préjudiciable à son appréciation des prélèvements et surtout pour sa courbe d'apprentissage voire la conservation de son acuité diagnostique. En effet, l'analyse de prélèvements repose sur la formation et la pratique du médecin ou du technicien spécialisé à examiner des prélèvements et à comparer des zones normales et des zones présentant des anomalies. Le fait de supprimer cette pratique par une analyse assistée par ordinateur peut mener les médecins ou techniciens spécialisés à perdre leurs compétences et ainsi entraîner des erreurs d'analyse.

En outre, l'opération de numérisation ligne par ligne et non pas champs par champs pour une image couleur nécessite un écrasement ou un recalage Rouge/Vert/Bleu (RVB) obligeant un haut niveau de réglage pour le recalage des images, ce haut niveau de réglage étant sensible aux moindres vibrations. De ce fait, cette numérisation ligne par ligne pour une image couleur peut prendre beaucoup de temps du fait des traitements appliqués sur la lame durant la numérisation. De plus, l'opération de numérisation pour une image couleur nécessite des temps de compression d'image importants.

Par ailleurs, l'opération de numérisation est délicate pour des prélèvements contenant des amas tridimensionnels de cellules, c'est-à-dire des « empilements de cellules », notamment de cellules pathologiques. En effet, la mise au point par la caméra se fait à une épaisseur de l'amas définie par un ou plusieurs points de focus au niveau de l'amas, laissant les autres points plus profonds ou plus superficiels dans le flou. Afin d'obtenir une image « grand champ », c'est-à-dire de l'intégralité de la plaque d'analyse, correcte pour une lecture de dépistage ou de diagnostic sur la seule plaque virtuelle, il est nécessaire d'avoir une surface de « flou » la plus petite possible (moins de 5%). De plus, les outils de segmentation sont plus difficiles à manier sur des zones de flou touchant aussi bien les cellules isolées que les amas tridimensionnels. De ce fait, l'analyse des cellules et des noyaux devient beaucoup moins pertinente et peut même entraîner une mauvaise catégorisation des cellules.

L'invention vise à pallier les inconvénients mentionnés ci-dessus en proposant un procédé d'analyse qui, tout en permettant de gagner du temps dans les processus de numérisation, le rend plus performant en terme de surface analysable et plus performant en terme de qualité de détection des anomalies cellulaires pour l'analyse assistée par ordinateur, dans un cadre de suivi qualité plus pertinent associant des points de vérification diagnostique et d'éducation au diagnostic pour le médecin ou le technicien spécialisé.

A cet effet, l'invention concerne un procédé du type précité, caractérisé en ce qu'il comprend les étapes suivantes :
- repérer un plan de référence de la plaque d'analyse comprenant une lame et une lamelle disposée au-dessus de la lame, pour l'acquisition d'images, ledit plan de référence étant défini par la surface de la lame ou de la lamelle ; et
- réaliser au moins une seconde acquisition d'images, ladite seconde acquisition étant réalisée à une épaisseur différente du prélèvement de la première acquisition, de sorte à obtenir une pluralité d'images, correspondant à une coupe du prélèvement réalisée à une épaisseur différente.

Un tel procédé permet de réaliser de façon particulièrement simple au moins une image d'un prélèvement permettant de détecter des cellules éventuellement pathologiques et d'acquérir un grand nombre d'informations sur le prélèvement, comme cela sera décrit ultérieurement.

Selon d'autres caractéristiques du procédé de préparation :
- le repérage du plan de référence de la plaque d'analyse est réalisé par l'acquisition d'une image topographique de la lame ou de la lamelle,
- la plaque d'analyse comprend au moins une mire agencée pour repérer le plan de référence pour l'acquisition d'images quelle que soit l'épaisseur du prélèvement disposé sur la plaque d'analyse, ladite acquisition d'images étant effectuée à une épaisseur définie par rapport au plan de référence de la lame ou lamelle défini par la mire,
- la plaque d'analyse comprend au moins quatre mires disposées autour du prélèvement,
- la ou chaque mire est imprimée sur la plaque d'analyse,
- l'épaisseur du prélèvement de l'acquisition d'images est réglable,
- le procédé comprend en outre une étape de superposition des données des images acquises lors de l'acquisition des images et celles des images acquises modifiées lors du traitement des images acquises, de façon à ne réaliser qu'un seul plan d'image virtuelle grand champ,
- l'acquisition d'images du prélèvement disposé sur la plaque d'analyse s'effectue selon une échelle de niveaux de gris,
- le procédé comprend en outre l'étape suivante :
- effectuer sur la plaque d'analyse virtuelle (2) un traitement des images acquises de sorte à obtenir une restitution virtuelle des couleurs et de l'intensité des couleurs du cytoplasme et/ou du noyau des cellules du prélèvement, lesdites couleurs et ladite intensité pouvant être modifiées selon les préférences de la personne en charge de l'analyse,
- le traitement du prélèvement est une étape de coloration nucléaire ou une coloration de cytologie, ledit traitement étant agencé pour rendre le cytoplasme presque transparent et accentuer le contraste entre le noyau et/ou l'ARN cytoplasmique des cellules et le cytoplasme,
- le traitement des images acquises correspond à une recoloration virtuelle polychrome de type Papanicolaou, Schorr, May Grunwald Giemsa ou Giemsa ou monochrome de ces images acquises,
- le niveau de recoloration virtuelle des images acquises est réglable,
- le procédé comprend une étape d'affichage de la plaque d'analyse virtuelle,
- le procédé comprend les étapes suivantes :
   - faire défiler automatiquement les images grand champ acquises du prélèvement, sans affichage de données complémentaires ; et
   - arrêter automatiquement le défilement si au moins une anomalie pouvant signifier la présence d'une cellule pathologique, est détectée par le système d'analyse automatique,
- l'arrêt automatique du défilement si au moins une anomalie pouvant signifier la présence d'une cellule pathologique est détectée comprend une étape d'affichage de la plaque d'analyse agrandie au niveau de l'anomalie et d'affichage secondaire d'informations sur la zone de prélèvement affichée et/ou sur l'intégralité du prélèvement et/ou sur le patient sur lequel le prélèvement a été effectué et/ou sur le résultat d'examens complémentaires réalisés sur le prélèvement,
- le procédé comprend une étape d'agrandissement de la plaque d'analyse virtuelle afin de permettre le visionnage d'un détail de ladite plaque.

D'autres aspects et avantages de l'invention apparaîtront à la lecture de la description qui suit, donnée à titre d'exemple et faite en référence aux dessins, sur lesquels :
- la figure 1 est une représentation schématique des différentes étapes du procédé de préparation d'une plaque d'analyse virtuelle selon l'invention ;
- la figure 2 est une représentation schématique en coupe d'une plaque d'analyse d'un prélèvement et d'un dispositif de numérisation de la lame, et
- la figure 3 est un diagramme représentant les différentes étapes d'analyse d'une plaque virtuelle.

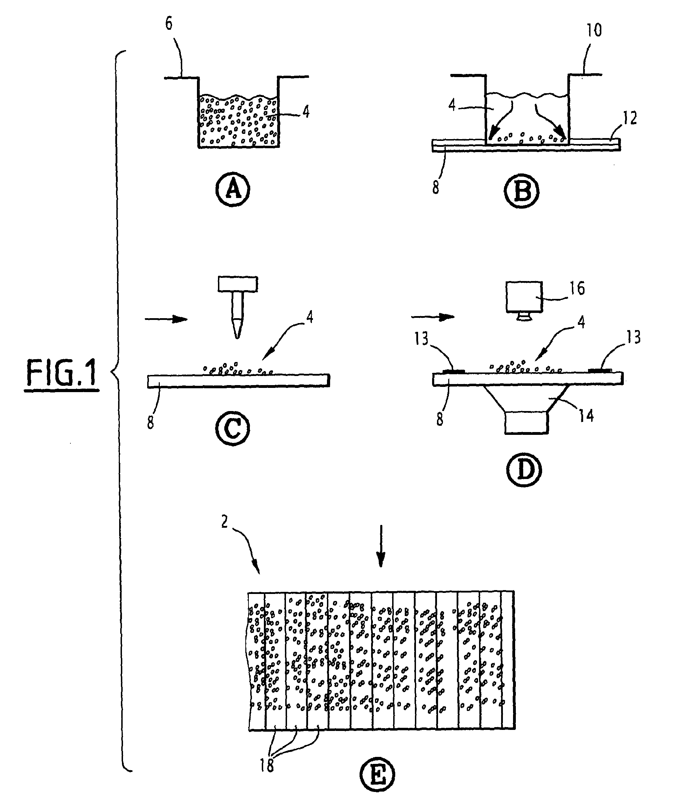

En référence à la figure 1, on décrit un procédé de préparation d'une plaque d'analyse virtuelle 2 en vue de son analyse cellulaire assistée par un système informatique. Par plaque virtuelle 2, on entend un ensemble d'informations et de données numériques regroupées concernant un prélèvement 4.

Le prélèvement 4 est par exemple obtenu par frottis (cervicaux, vaginaux ou autres), par ponction d'organes (sein, thyroïde, ganglion ou autres) ou encore par recueil (urine, lavage broncho-alvéolaire ou autres). Au cours d'une première étape A, le prélèvement est mis en suspension, par exemple dans un tube ou un flacon 6 de prélèvement.

Au cours d'une étape B, le prélèvement 4 est disposé sur une plaque d'analyse 8. De façon connue, le dépôt des cellules sur la plaque 8 se fait par exemple par décantation. Le prélèvement est versé dans une chambre de décantation 10 dont le fond est ouvert sur la plaque d'analyse 8. Des moyens d'absorption 12 permettent l'absorption de la solution au fur et à mesure que les cellules se déposent sur la plaque d'analyse 8. Un tel procédé de dépôt est connu et ne sera pas décrit en détail ici.

Au cours d'une étape C, le prélèvement subit un traitement visant à marquer/colorer les noyaux, l'ADN et/ou l'ARN des cellules en accentuant très nettement le contraste par rapport aux cytoplasmes de ces mêmes cellules. Un tel marquage permet de correctement segmenter les noyaux pour en faire l'étude morphologique et pour faire une quantification de l'ADN (pour une analyse de la ploïdie par exemple) et/ou de l'ARN afin de repérer les cellules potentiellement pathologiques.

Ce marquage est par exemple réalisé de façon automatique au moyen d'un automate muni de moyens de pipetage utilisés à la fois pour la mise en solution du prélèvement 4 et pour le dépôt de la suspension cellulaire sur une plaque d'analyse 8.

L'étape B de décantation de la suspension cellulaire peut être réalisée avant ou après l'étape C de marquage/coloration décrite ci-dessus.

Ce marquage est de préférence réalisé avec de l'Hematoxyline.

Un marqueur différent des marqueurs utilisés pour la quantification d'ADN peut être utilisé, tel que l'hypéricine ou un marqueur spécifique de prolifération ou d'agents pathogènes, tels que par exemple des virus oncogènes du type Human Papilloma Virus, dans le cas du frottis du col de l'utérus.

D'autres colorations utilisées dans l'état de la technique pourraient être utilisées, mais elles présentent des inconvénients. Ainsi, on pourrait envisager une coloration stoechiométrique, qui offre une coloration des moyaux proportionnelle à la quantité d'ADN, ce qui permet sa quantification, et donc de repérer et d'analyser les cellules pathologiques dans le cadre de la ploïdie.

Cependant, cette coloration particulière, lorsqu'il s'agit d'une coloration de Feulgen par exemple, est incompatible «techniquement» avec une coloration de Papanicolaou et nécessite donc de refaire un étalement cellulaire sur lame pour l'analyse du médecin ou du technicien spécialisé. Certains industriels ont essayé d'associer une coloration stoechiométrique avec la coloration de Papanicolaou et ont donc utilisé une coloration renfermant une thionine et nécessitant une fixation au méthanol qui est toxique, et surtout qui modifie la coloration de Papanicolaou dans son interprétation, notamment avec des noyaux dont la chromatine apparaît trop « noire » pour une analyse fine de la composition desdits noyaux, et donc entraîne une difficulté d'analyse pour le diagnostic d'états précancéreux ou cancéreux.

Au cours d'une étape D, la plaque d'analyse 8 comprenant le prélèvement 4, coloré par un colorant nucléaire connu ou par une coloration cytologique connue mais modifiée pour rendre le cytoplasme presque transparent, est soumis à un éclairement en lumière blanche 14 afin d'acquérir des images du prélèvement 4 au moyen du dispositif d'acquisition d'images 16.

L'acquisition d'images en lumière blanche permet d'obtenir des images du prélèvement coloré par la coloration nucléaire ou la coloration cytologique modifiée conservant des cytoplasmes presque transparents afin d'augmenter le contraste avec les noyaux.

L'appareil d'acquisition d'images 16 permet d'obtenir des images en noir et blanc, plus précisément sur une échelle de niveaux de gris. Un tel choix permet une acquisition d'images plus rapide et avec une meilleure résolution que si l'acquisition était réalisée en couleur.

L'acquisition d'images en lumière blanche nécessite d'avoir repéré au préalable un plan de référence de la plaque d'analyse, définissant une épaisseur de référence par rapport à laquelle l'épaisseur du prélèvement est mesurée, et ce à titre de relevé typographique de la surface et de ses inégalités.

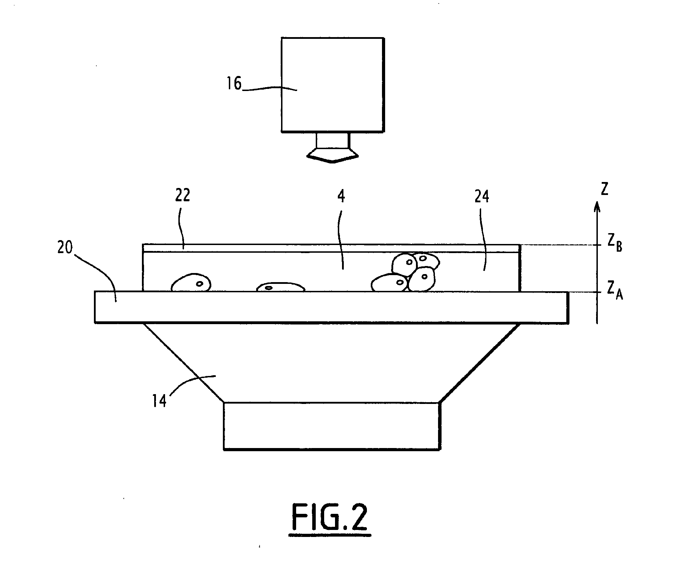

En référence à la figure 2, la plaque d'analyse 8 comprend une lame 20 et une lamelle 22 disposée au-dessus de la lame 20. Le prélèvement 4 de l'échantillon étant disposé entre la lame 20 et la lamelle 22, et maintenu par de la colle 24.

Le plan de référence de la plaque d'analyse 8 est défini soit au niveau de la face supérieure de la lame 20, désignée par l'épaisseur Z_{A}, soit au niveau de la face supérieure de la lamelle 22 désignée par l'épaisseur Z_{B}.

Selon un mode de réalisation, le repérage du plan de référence est obtenu par l'acquisition d'une image de la lame ou la lamelle, par exemple par réflexion d'ultrasons ou de lumière sur la lame ou la lamelle avec ou sans un traitement spécifique de la lame.

Ce traitement consiste par exemple à rendre la lame ou la lamelle au moins partiellement réfléchissante.

Avant l'acquisition d'images en lumière blanche, le repérage du plan de référence de la plaque d'analyse permet de s'affranchir de la mise au point sur les cellules et des problématiques de polymérisation des colles pour lamelles de verre ou d'éventuelles bulles présentes dans le prélèvement. L'acquisition d'images en lumière blanche permet d'obtenir à différentes épaisseurs repérées par rapport au plan de référence plusieurs plans d'images pour une mise au point secondairement traitée pour la rendre optimale. Elle permet également de s'affranchir des problématiques de réglage horizontal de l'appareil. En effet, la définition du plan de référence permet de « recaler » l'image par rapport à ce plan.

Ainsi, le réglage de l'appareil par rapport à la plaque ne nécessite pas une aussi grande précision que dans l'art antérieur.

Selon un autre mode de réalisation, la plaque d'analyse 8 comprend au moins une mire 13 agencée pour repérer le plan de référence de la plaque d'analyse avant l'acquisition d'images du prélèvement.

Selon une variante, la plaque d'analyse 8 comprend au moins quatre mires 13 disposées de manière uniformément répartie autour du prélèvement, par exemple les quatre points cardinaux. Selon un mode de réalisation, la ou chaque mire 13 est imprimée sur la plaque d'analyse 8. Selon un autre mode de réalisation, la ou chaque mire 13 est fixée sur la plaque d'analyse 8, sur la lame ou sur la lamelle.

En outre, afin de visualiser correctement des amas de cellules tridimensionnels au cours de la numérisation, l'acquisition d'images est réalisée à une ou plusieurs épaisseurs différentes de l'échantillon.

Ces différentes épaisseurs auxquelles l'acquisition d'images est réalisée peuvent être sélectionnées préalablement à l'acquisition et sont repérées par rapport au plan de référence sur la lame d'analyse défini par la mire ou par l'image de la surface de la lame ou la lamelle.

L'appareil d'acquisition d'images 16 permet de « scanner » le prélèvement 4 avec une résolution très fine et d'obtenir à partir d'une plaque 8, des images en lumière blanche. La plaque d'analyse 8 est scannée ligne par ligne comme le proposent de nombreux industriels. Ainsi, chaque image acquise représente une bande 18 de largeur prédéfinie de la plaque d'analyse 8, par exemple on choisit une largeur de faible valeur afin d'obtenir un grand nombre d'images et par conséquent une meilleure résolution. Les images mises côte à côte permettent d'obtenir une image de l'intégralité de la plaque de prélèvement, ou images « grand champ », et donc de l'intégralité du prélèvement afin de former une plaque d'analyse virtuelle 2, comme représentée à l'étape E de la figure 1. Le cas échéant, l'acquisition permet d'obtenir des images de l'intégralité de la plaque de prélèvement à différentes épaisseurs de l'échantillon.

Ainsi, les images, obtenues avec un seul et même appareil et de façon très simple, sont une représentation fidèle du prélèvement 4 associant un grand nombre d'informations en lumière blanche.

Les données numériques obtenues avec l'appareil 16 en lumière blanche subissent un traitement informatique afin d'obtenir une plaque d'analyse virtuelle 2 modifiée formée de la ou des image(s) ayant subit une recoloration virtuelle polychrome de type Papanicolaou, Schorr, May Grunwald Giemsa ou Giemsa ou monochrome visant à colorer les cellules telle que classiquement décrit et connu pour une analyse cytologique ou morphologique par l'homme du métier.

Selon un mode de traitement informatique, la recoloration virtuelle est une coloration de Papanicolaou, obtenue telle que connue depuis longtemps et dont la sémiologie, largement décrite dans la littérature, permet la reconnaissance éventuelle d'anomalies cytoplasmiques et nucléaires correspondant par exemple à la présence de cellules précancéreuses ou cancéreuses. Cette recoloration permet également la reconnaissance des différents types de cellules et de leur nombre afin de déterminer la qualité représentative du prélèvement et, par exemple de définir si le prélèvement est représentatif ou non. Cette recoloration virtuelle permet l'analyse de la plaque virtuelle par un procédé d'analyse cellulaire décrit ci-dessous. La recoloration de Papanicolaou étant virtuelle, une coloration du type Feulgen peut être envisagée sans problème de compatibilité.

L'analyse cellulaire se fait par un examen des images du prélèvement par le médecin ou le technicien spécialisé chargé de détecter les cellules pathologiques, pour proposer un diagnostic qui déclenchera éventuellement des examens plus approfondis voire un traitement. Pour des raisons d'assurance qualité, la présence du médecin ou du technicien spécialisé est obligatoire de sorte que la détection de cellules éventuellement pathologiques ne peut pas être entièrement automatisée.

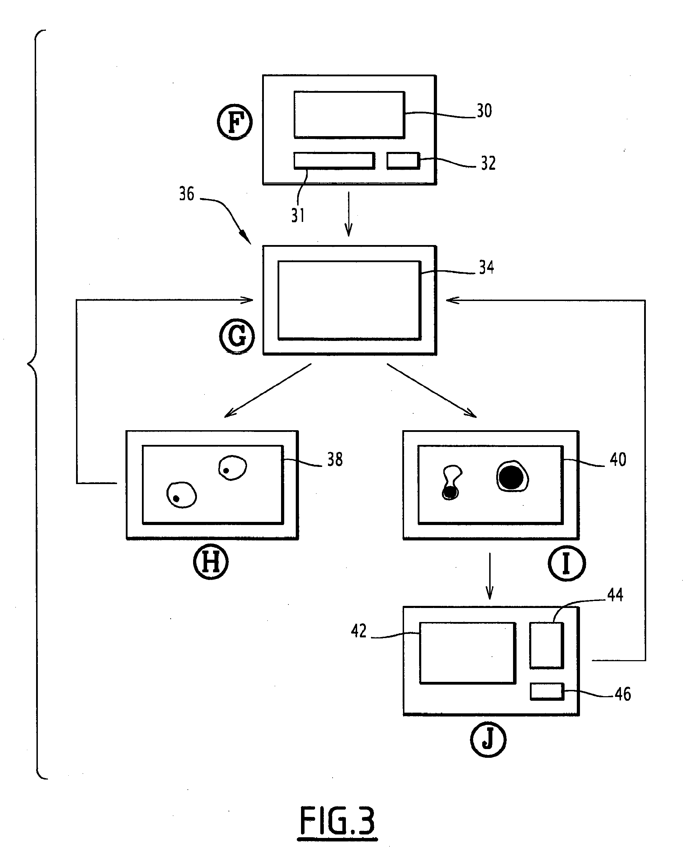

En référence à la figure 3, le processus de visualisation des images ayant subi une recoloration et de diagnostic est détaillé.

Au cours d'une étape F, les images 30 de la plaque d'analyse virtuelle 2 modifiée formée de l'image, ou des images à différentes épaisseurs de l'échantillon, ayant subi une recoloration virtuelle sont projetées sur un moyen d'affichage tel qu'un écran. La restitution virtuelle des couleurs et de leur intensité tant pour le cytoplasme que pour le noyau, peut être réglée de façon à correspondre au plus près des habitudes de chaque lecteur, c'est-à-dire le médecin ou le technicien spécialisé, en termes d'intensité et de qualité de coloration.

Des informations 31 sur le patient peuvent être associées à la plaque d'analyse virtuelle 2 en entrant ces informations dans une base de données et en les associant à l'image, ou aux images à différentes épaisseurs, du prélèvement 4 correspondant au patient sur lequel ce prélèvement 4 a été effectué après une autorisation de l'opérateur, par exemple par l'actionnement d'un bouton virtuel 32 au cours de l'étape F.

Les images 34 de prélèvement défilent sous les yeux du médecin ou du technicien spécialisé pour examen au cours d'une étape G. Le défilement des images 34 est organisé par le système informatique et se fait de manière automatique. Chaque image 34 est affichée plein champ sans affichage des données complémentaires afin d'éviter de disperser l'attention du médecin ou du technicien spécialisé lors de l'analyse (ou « screening » en anglais), et ce pendant un temps prédéterminé calculé pour permettre au médecin ou au technicien spécialisé d'observer l'intégralité de chaque image projetée et de détecter une éventuelle anomalie dans une image. Le temps d'affichage de chaque image peut être réglé par le médecin ou le technicien spécialisé en fonction de ses compétences ou en fonction d'autres informations. Par exemple, si le prélèvement a été effectué pour un patient « à risque » ayant une plus grande probabilité de présenter des cellules pathologiques, le temps d'affichage peut être réglé pour être plus long afin d'effectuer un examen plus minutieux du prélèvement.

Les images 34 qui défilent sont donc celles de la plaque d'analyse virtuelle modifiée, formée de l'image, ou des images à différentes épaisseurs, ayant subi une recoloration virtuelle de type Papanicolaou, Schorr, May Gruwald Giemsa ou Giemsa. Les images 34 sous cette coloration permettent de détecter la présence éventuelle d'anomalies correspondant par exemple à la présence de cellules précancéreuses ou cancéreuses et dont la sémiologie connue depuis longtemps est largement décrite dans la littérature, et de vérifier que le prélèvement répond bien aux critères de Bethesda, dans le cadre du frottis du col de l'utérus par exemple. Le logiciel peut également acquérir d'autres informations sur l'étalement cellulaire. Ces informations sont rattachées à l'image (ou aux images à différentes épaisseurs) par le système informatique pour compléter la plaque d'analyse virtuelle 2.

Le médecin ou le technicien spécialisé observe chaque image affichée, à l'écran, et détermine si une anomalie est présente ou non. Cette détection peut également être effectuée de manière automatique par le système informatique au moyen du logiciel d'analyse d'images.

Dans le cas où ni le médecin ou le technicien spécialisé, ni le système informatique d'analyse cellulaire ne détecte d'anomalie dans l'image affichée 38 au cours d'une étape H, le procédé de diagnostic se poursuit par la projection de l'image suivante après l'écoulement d'un temps d'affichage préalablement réglé.

Selon un mode de réalisation de l'analyse cellulaire, une étape est prévue, au cours de laquelle le système informatique arrête automatiquement le défilement des images sur une image sur laquelle aucune anomalie n'est détectée et attend une validation du médecin ou du technicien spécialisé pour redémarrer le défilement. L'arrêt sur une telle image permet d'analyser en détail des images dites de référence afin de confirmer ce qui est considéré comme un prélèvement normal. L'arrêt sur des images dites normales peut se faire de façon aléatoire ou au bout d'un certain nombre d'images affichées. La description de l'analyse détaillée d'une image est faite ci-dessous en relation avec l'analyse d'une image présentant une anomalie.

Si une anomalie est détectée dans l'image 40 par le médecin ou le technicien spécialisé et/ou le système informatique, le procédé se poursuit par l'interruption du défilement des images 36 au cours d'une étape I.

L'interruption du défilement est réalisée de façon automatique par le système informatique si celui-ci détecte une anomalie, ou de façon manuelle par le médecin ou le technicien spécialisé s'il souhaite observer une image plus en détail ou s'il repère une anomalie.

L'image 42 est alors affichée avec un taux d'agrandissement supérieur afin de visualiser l'anomalie en détail. Par exemple, l'affichage des images peut se faire avec un taux d'agrandissement x10 au cours du défilement, et être doublé (x20) dans le cas où une anomalie est détectée, comme représenté par l'étape J de la figure 3.

L'affichage de l'image contenant une anomalie peut être accompagné de l'affichage d'informations 44 sur la zone de prélèvement affichée et/ou sur l'intégralité du prélèvement et/ou sur le patient sur lequel le prélèvement a été effectué et/ou sur le résultat d'examens complémentaires réalisés sur le prélèvement, notamment d'examens de biologie moléculaire.

L'image affichée sous recoloration virtuelle, et pour laquelle le défilement a été interrompu, est associée à l'image de la même zone sans recoloration virtuelle. Cet affichage permet au médecin ou au technicien spécialisé d'affiner son analyse des cellules affichées et de confirmer ou non si certaines sont éventuellement pathologiques. En outre, avec l'affichage de l'image sans recoloration virtuelle, d'autres informations peuvent être affichées simultanément, telles que des données quantitatives, des spectres ou des informations sur le patient sur lequel le prélèvement a été effectué, etc. Cette analyse plus fine couplée à l'arrêt automatisé du défilement permet de diminuer le nombre de faux négatifs. De plus, dans le cadre du frottis du col de l'utérus par exemple, le contrôle du diagnostic par le médecin ou le technicien spécialisé des zones sélectionnées par le système permet de conserver un haut niveau de spécificité du diagnostic cytologique dans ce cas. De ce fait, les critères de sensibilité et de spécificité du frottis de dépistage deviennent plus proches et élevés.

Le redémarrage du défilement ne peut être commandé que par le médecin ou le technicien spécialisé par exemple par la pression d'un bouton de validation 46. Ceci permet de s'assurer que si le défilement a été interrompu de façon automatique, l'image affichée et présentant éventuellement une anomalie a bien été examinée par un médecin ou un technicien spécialisé. Il en est de même pour les images normales affichées.

Au cours des étapes F à J, le médecin ou le technicien spécialisé peut librement effectuer un grossissement de zones particulières de l'image affichée, aussi bien sur l'image avec recoloration virtuelle que sur l'image sans recoloration virtuelle. Le médecin ou le technicien spécialisé peut également basculer de l'image avec recoloration virtuelle à l'image sans recoloration virtuelle comme bon lui semble.

Le procédé décrit ci-dessus permet une analyse rapide et efficace de prélèvements, diminuant le risque de « faux négatifs ».

En outre, l'expérience des médecins ou techniciens spécialisés en terme de qualité diagnostique et surtout de spécificité, est préservée du fait de la reconnaissance des couleurs et de leur intensité liée aux images virtuelles des préparations cytologiques et/ou histologiques traitées et affichées.

Le procédé permet également d'adapter la plaque d'analyse aux préférences du médecin ou technicien spécialisé chargé de l'analyse. En effet, le médecin ou technicien spécialisé peut choisir l'intensité et la coloration de la plaque d'analyse virtuelle à sa guise.

Le procédé permet en outre d'acquérir des images de meilleure résolution en niveaux de gris que par une acquisition couleur.

De plus, le procédé permet une acquisition à différentes épaisseurs dans l'échantillon, tout en conservant des images nettes, correctes, grâce au plan de référence permettant de s'affranchir de la problématique de réglage horizontal de l'appareil. Ainsi, même si l'appareil ne permet pas un défilement suffisamment horizontal de la lame par défaut de réglages, il est possible d'obtenir une image de qualité interprétable. Le réglage de l'appareil ne nécessitant plus une aussi grande précision, le procédé offre un premier gain de temps pour la numérisation.

L'acquisition en niveaux de gris permet également une acquisition plus rapide qu'en couleur, notamment lors de l'acquisition à différentes épaisseurs dans le prélèvement. En effet, lorsque le médecin ou technicien spécialisé chargé de l'analyse souhaite réaliser, par exemple, des plans tous les 2 µm dans l'épaisseur d'une cellule, soit 10 µm, l'acquisition est cinq fois plus longue, ce qui est trop long pour un seul échantillon. En niveau de gris, le temps d'acquisition est sensiblement diminué.

Enfin, ce procédé permettant la recoloration d'une plaque d'analyse virtuelle permet de réaliser une économie de colorant tout en garantissant une analyse rapide et efficace des prélèvements.

## Revendications

1. Procédé de préparation d'une plaque d'analyse virtuelle (2) d'un prélèvement (4) cytologique disposé sur une plaque d'analyse (8) en vue de permettre l'analyse cellulaire dudit prélèvement, comprenant les étapes suivantes :
- réaliser un traitement du prélèvement, ledit traitement étant réalisé pour permettre de différencier les cellules pathologiques des cellules saines du prélèvement (4),
- effectuer au moins une première acquisition d'images du prélèvement (4) disposé sur la plaque d'analyse (8) de sorte à obtenir une pluralité d'images représentant chacune une zone (18) de la plaque d'analyse, lesdites images mises côte à côte formant une image de l'intégralité du prélèvement de sorte à créer une plaque d'analyse virtuelle (2),
**caractérisé en ce qu'**il comprend les étapes suivantes :
- repérer un plan de référence de la plaque d'analyse comprenant une lame et une lamelle disposée au-dessus de la lame, pour l'acquisition d'images, ledit plan de référence étant défini par la surface de la lame ou de la lamelle ; et
- réaliser au moins une seconde acquisition d'images, ladite seconde acquisition étant réalisée à une épaisseur différente du prélèvement de la première acquisition, de sorte à obtenir une pluralité d'images, correspondant à une coupe du prélèvement réalisée à une épaisseur différente.

2. Procédé de préparation selon la revendication 1, **caractérisé en ce que** le repérage du plan de référence de la plaque d'analyse est réalisé par l'acquisition d'une image topographique de la lame ou de la lamelle.

3. Procédé de préparation selon l'une quelconque des revendications 1 à 2, **caractérisé en ce que** la plaque d'analyse (8) comprend au moins une mire (13) agencée pour repérer le plan de référence pour l'acquisition d'images quelle que soit l'épaisseur du prélèvement disposé sur la plaque d'analyse, ladite acquisition d'images étant effectuée à une épaisseur définie par rapport au plan de référence de la lame ou lamelle défini par la mire.

4. Procédé de préparation selon la revendication 3, **caractérisé en ce que** la plaque d'analyse (8) comprend au moins quatre mires (13) disposées autour du prélèvement (4).

5. Procédé de préparation selon l'une quelqu'une des revendications 3 ou 4, **caractérisé en ce que** la ou chaque mire (13) est imprimée sur la plaque d'analyse (8).

6. Procédé de préparation selon l'une quelconque des revendications 1 à 5, **caractérisé en ce que** l'épaisseur du prélèvement de l'acquisition d'images est réglable.

7. Procédé de préparation selon l'une quelconque des revendications 1 à 6, **caractérisé en ce qu'**il comprend en outre une étape de superposition des données des images acquises lors de l'acquisition des images et celles des images acquises modifiées lors du traitement des images acquises, de façon à ne réaliser qu'un seul plan d'image virtuelle grand champ.

8. Procédé de préparation selon l'une quelconque des revendications 1 à 7, **caractérisé en ce que** l'acquisition d'images du prélèvement (4) disposé sur la plaque d'analyse (8) s'effectue selon une échelle de niveaux de gris.

9. Procédé de préparation selon l'une quelconque des revendications 1 à 8, **caractérisé en ce qu'**il comprend en outre l'étape suivante :
- effectuer sur la plaque d'analyse virtuelle (2) un traitement des images acquises de sorte à obtenir une restitution virtuelle des couleurs et de l'intensité des couleurs du cytoplasme et/ou du noyau des cellules du prélèvement, lesdites couleurs et ladite intensité pouvant être modifiées selon les préférences de la personne en charge de l'analyse.

10. Procédé de préparation selon l'une quelconque des revendications 1 à 9, **caractérisé en ce que** le traitement du prélèvement est une étape de coloration nucléaire ou une coloration de cytologie, ledit traitement étant agencé pour rendre le cytoplasme presque transparent et accentuer le contraste entre le noyau et/ou l'ARN cytoplasmique des cellules et le cytoplasme.

11. Procédé de préparation selon l'une quelconque des revendications 9 ou 10, **caractérisé en ce que** le traitement des images acquises correspond à une recoloration virtuelle polychrome de type Papanicolaou, Schorr, May Grunwald Giemsa ou Giemsa ou monochrome de ces images acquises.

12. Procédé de préparation selon l'une quelconque des revendications 9 à 11, **caractérisé en ce que** le niveau de recoloration virtuelle des images acquises est réglable.

13. Procédé de préparation selon l'une quelconque des revendications 1 à 12, **caractérisé en ce qu'**il comprend une étape d'affichage de la plaque d'analyse virtuelle.

14. Procédé de préparation selon la revendication 13, **caractérisé en ce qu'**il comprend les étapes suivantes :
- faire défiler automatiquement les images grand champ acquises du prélèvement, sans affichage de données complémentaires ; et
- arrêter automatiquement le défilement si au moins une anomalie pouvant signifier la présence d'une cellule pathologique, est détectée par le système d'analyse automatique.

15. Procédé de préparation selon la revendication 14, **caractérisé en ce que** l'arrêt automatique du défilement si au moins une anomalie pouvant signifier la présence d'une cellule pathologique est détectée comprend une étape d'affichage de la plaque d'analyse agrandie au niveau de l'anomalie et d'affichage secondaire d'informations sur la zone de prélèvement affichée et/ou sur l'intégralité du prélèvement et/ou sur le patient sur lequel le prélèvement a été effectué et/ou sur le résultat d'examens complémentaires réalisés sur le prélèvement.

16. Procédé de préparation selon l'une quelconque des revendications 13 à 15, **caractérisé en ce qu'**il comprend une étape d'agrandissement de la plaque d'analyse virtuelle afin de permettre le visionnage d'un détail de ladite plaque.

## Patentansprüche

1. Herstellungsverfahren einer virtuellen Analyseplatte (2) einer zytologischen Probe (4), die auf einer Analyseplatte (8) angeordnet ist, um die Zellanalyse der Probe zu ermöglichen, das die folgenden Schritte umfasst:
- Durchführen einer Bearbeitung der Probe, wobei die Bearbeitung durchgeführt wird, um die Differenzierung der pathologischen Zellen von gesunden Zellen der Probe (4) zu ermöglichen,
- Durchführen mindestens einer ersten Bilderfassung der auf der Analyseplatte (8) angeordneten Probe (4), um eine Vielzahl von Bildern zu erhalten, die jeweils eine Zone (18) der Analyseplatte darstellen, wobei die nebeneinandergestellten Bilder ein Bild der Gesamtheit der Probe derart bilden, dass eine virtuelle Analyseplatte (2) gebildet wird,
**dadurch gekennzeichnet, dass** es die folgenden Schritte umfasst:
- Lokalisieren einer Referenzebene der Analyseplatte, die einen Objektträger und ein auf dem Objektträger angeordnetes Deckglas umfasst, für die Bilderfassung, wobei die Referenzebene von der Oberfläche des Objektträgers oder des Deckglases definiert ist, und
- Durchführen mindestens einer zweiten Bilderfassung, wobei die zweite Erfassung in einer Dicke durchgeführt wird, die sich von der ersten Erfassung der Probe unterscheidet, um eine Vielzahl von Bildern zu erhalten, die einem Probenschnitt entsprechend, der in einer anderen Dicke durchgeführt wurde.

2. Herstellungsverfahren nach Anspruch 1, **dadurch gekennzeichnet, dass** die Lokalisierung der Referenzebene der Analyseplatte durch die Erfassung eines topografischen Bilds des Objektträgers oder des Deckglases durchgeführt wird.

3. Herstellungsverfahren nach einem der Ansprüche 1 bis 2, **dadurch gekennzeichnet, dass** die Analyseplatte (8) mindestens eine Markierung (13) umfasst, die ausgebildet ist, um die Referenzebene für die Bilderfassung unabhängig von der Dicke der auf der Analyseplatte angeordneten Probe zu lokalisieren, wobei die Bilderfassung in einer Dicke durchgeführt wird, die im Verhältnis zu der von der Markierung definierten Referenzebene des Objektträgers oder Deckglases definiert ist.

4. Herstellungsverfahren nach Anspruch 3, **dadurch gekennzeichnet, dass** die Analyseplatte (8) mindestens vier Markierungen (13) umfasst, die um die Probe (4) angeordnet sind.

5. Herstellungsverfahren nach einem der Ansprüche 3 oder 4, **dadurch gekennzeichnet, dass** die oder jede Markierung (13) auf der Analyseplatte (8) aufgedruckt ist.

6. Herstellungsverfahren nach einem der Ansprüche 1 bis 5, **dadurch gekennzeichnet, dass** die Dicke der Bilderfassungsprobe einstellbar ist.

7. Herstellungsverfahren nach einem der Ansprüche 1 bis 6, **dadurch gekennzeichnet, dass** es ferner einen Schritt des Überlagerung der Daten der Bilder, die bei der Bilderfassung erfasst wurden, und der Daten der erfassten Bilder, die während der Bearbeitung der erfassten Bilder geändert wurden, umfasst, um nur eine einzige virtuelle Bildgroßfeld-Ebene zu realisieren.

8. Herstellungsverfahren nach einem der Ansprüche 1 à 7, **dadurch gekennzeichnet, dass** die Bilderfassung der auf der Analyseplatte (8) angeordneten Probe (4) gemäß einer Graustufenskala erfolgt.

9. Herstellungsverfahren nach einem der Ansprüche 1 bis 8, **dadurch gekennzeichnet, dass** es ferner den folgenden Schritt umfasst:
- Durchführen einer Bearbeitung der erfassten Bilder auf der virtuellen Analyseplatte (2), um eine virtuelle Wiedergabe der Farben und der Intensität der Farben des Zytoplasmas und/oder des Kerns der Zellen der Probe zu erhalten, wobei die Farben und die Intensität gemäß den Vorlieben der mit der Analyse betrauten Person veränderbar sind.

10. Herstellungsverfahren nach einem der Ansprüche 1 bis 9, **dadurch gekennzeichnet, dass** die Bearbeitung der Probe ein Schritt der Kernfärbung oder eine zytologische Färbung ist, wobei die Bearbeitung ausgebildet ist, um das Zytoplasma fast durchsichtig zu gestalten und den Kontrast zwischen dem Kern und/oder der Zytoplasma-RNS der Zellen und dem Zytoplasma zu akzentuieren.

11. Herstellungsverfahren nach einem der Ansprüche 9 oder 10, **dadurch gekennzeichnet, dass** die Bearbeitung der erfassten Bilder einer virtuellen polychromen Neufärbung vom Typ Papanicolaou, Schorr, May Grunwald Giemsa oder Giemsa oder monochromen Neufärbung dieser erfassten Bilder entspricht.

12. Herstellungsverfahren nach einem der Ansprüche 9 bis 11, **dadurch gekennzeichnet, dass** das Niveau der virtuellen Neufärbung der erfassten Bilder einstellbar ist.

13. Herstellungsverfahren nach einem der Ansprüche 1 bis 12, **dadurch gekennzeichnet, dass** es einen Anzeigeschritt der virtuellen Analyseplatte umfasst.

14. Herstellungsverfahren nach Anspruch 13, **dadurch gekennzeichnet, dass** es die folgenden Schritte umfasst:
- automatischer Durchlauf der erfassten Großfeldbilder der Probe, ohne Anzeige komplementärer Daten, und
- automatisches Stoppen des Durchlaufs, wenn mindestens eine Anomalie, die die Anwesenheit einer pathologischen Zelle bedeuten könnte, von dem automatischen Analysesystem ermittelt wird.

15. Herstellungsverfahren nach Anspruch 14, **dadurch gekennzeichnet, dass** das der automatische Stopp des Durchlaufs, wenn mindestens eine Anomalie, die die Anwesenheit einer pathologischen Zelle bedeuten könnte, ermittelt wird, einen Schritt der Anzeige der auf Ebene der Anomalie vergrößerten Analyseplatte und der sekundären Anzeige von Informationen über die angezeigte Probenzone und/oder über die Gesamtheit der Probe und/oder über den Patienten, bei dem die Probe entnommen wurde, und/oder über das Ergebnis komplementärer Untersuchungen, die mit der Probe durchgeführt wurden, umfasst.

16. Herstellungsverfahren nach einem der Ansprüche 13 bis 15, **dadurch gekennzeichnet, dass** es einen Vergrößerungsschritt der virtuellen Analyseplatte umfasst, um die Visualisierung eines Details der Platte zu erlauben.

## Claims

1. A method for preparing a virtual analysis plate (2) for a cytological sample (4) positioned on an analysis plate (8) with view to allowing cell analysis of said sample, comprising the following steps:
- performing a treatment of the sample, said treatment being carried out for allowing pathological cells to be differentiated from healthy cells of the sample (4),
- carrying out at least one first acquisition of images of the sample (4) positioned on the analysis plate (8) so as to obtain a plurality of images, each image representing an area (18) of the analysis plate, said images being placed side by side so as to form an image of the entirety of the sample in order to create a virtual analysis plate (2),
**characterized in that** it comprises the following steps:
- locating a reference plane of the analysis plate comprising a slide or a lamella positioned above the slide, for acquiring images, said reference plane being defined by the surface of the slide or of the lamella; and
- carrying out at least a second image acquisition, said second acquisition being carried out at a thickness different from that of the sample of the first acquisition, so as to obtain a plurality of images, corresponding to a section of the sample made at a different thickness.

2. The preparation method according to claim 1, **characterized in that** the location of the reference plane of the analysis plate is achieved by acquiring a topographic image of the slide or of the lamella.

3. The preparation method according to any of claims 1 to 2, **characterized in that** the analysis plate (8) comprises at least one test pattern (13) laid out so as to locate the reference plane for the image acquisition regardless of the thickness of the sample positioned on the analysis plate, said image acquisition being carried out at a thickness defined with respect to the reference plane of the slide or lamella defined by the test pattern.

4. The preparation method according to claim 3, **characterized in that** the analysis plate (8) comprises at least four test patterns (13) positioned around the sample (4).

5. The preparation method according to any of claims 3 to 4, **characterized in that** said or each test pattern (13) is printed on the analysis plate (8).

6. The preparation method according to any of claims 1 to 5, **characterized in that** the thickness of the sample of the image acquisition is adjustable.

7. The preparation method according to any of claims 1 to 6, **characterized in that** it further comprises a step of superposing data of the acquired images during the acquisition of the images and data of the acquired images modified during the processing of the acquired images, so as to only produce a single large field virtual image shot.

8. The preparation method according to any of claims 1 to 7, **characterized in that** the acquisition of images of the sample (4) positioned on the analysis plate (8) is carried out according to a grey level scale.

9. The preparation method according to any of claims 1 to 8, **characterized in that** it further comprises the following step:
- carrying out on a virtual analysis plate (2) processing of the acquired images so as to obtain a virtual restitution of the colors and the intensity of the colors of the cytoplasm and/or the nucleus of the cells of the sample, said colors and said intensity being able to be modified according to the preferences of the person in charge of the analysis.

10. The preparation method according to any of claims 1 to 9, **characterized in that** the treatment of the sample is a nuclear staining step or a cytological staining, said treatment being arranged so as to make the cytoplasm almost transparent and to enhance the contrast between the nucleus and/or cytoplasm RNA of the cells and the cytoplasm.

11. The preparation method according to any of claims 9 or 10, **characterized in that** the processing of the acquired images corresponds to polychrome recoloration of the Papanicolaou, Schorr, May Grunwald Giemsa or Giemsa or monochrome type of these acquired images.

12. The preparation method according to any of claims 9 to 11, **characterized in that** the virtual recoloration level of the acquired images is adjustable.

13. The preparation method according to any of claims 1 to 12, **characterized in that** it comprises a step for displaying the virtual analysis plate.

14. The preparation method according to claim 13, **characterized in that** it comprises the following steps:
- automatically scrolling the acquired large field images of the sample, without displaying additional data, and
- automatically stopping the scrolling if at least one abnormality which may signify the presence of a pathological cell, is detected by the automatic analysis system.

15. The preparation method according to claim 14, **characterized in that** the automatic stopping of the scrolling if at least one abnormality which may signify the presence of a pathological cell, is detected, comprises a step of displaying the analysis plate, enlarged at the abnormality and for secondarily displaying information on the displayed sampling area and/or on the entirety of the sample and/or on the patient on which the sample was taken and/or on the result of additional examinations made on the sample.

16. The preparation method according to any of claims 13 to 15, **characterized in that** it comprises a step of enlarging the virtual analysis plate in order to allow viewing of a detail of said plate.
